# EUROPÄISCHE PATENTSCHRIFT

(11) **EP 2 271 529 B1**
(45) Veröffentlichungstag und Bekanntmachung des Hinweises auf die Patenterteilung: **05.10.2011**
(21) Anmeldenummer: 09793455.8
(22) Anmeldetag: 25.11.2009
(51) Int. Cl.: B60T 10/02

(54) **VERFAHREN ZUM BETREIBEN EINES RETARDERS**
METHOD FOR OPERATING A RETARDER
PROCÉDÉ POUR FAIRE FONCTIONNER UN RALENTISSEUR

(30) Priorität: 03.12.2008 DE 102008060377
(43) Veröffentlichungstag der Anmeldung: 12.01.2011
(73) Patentinhaber: Voith Patent GmbH, 89522 Heidenheim (DE)
(72) Erfinder: HUTH, Tilman, 74589 Satteldorf (DE); BETZ, Jürgen, 74589 Satteldorf (DE); SCHERER, Roland, 74564 Crailsheim (DE)
(74) Vertreter: Schmidt, Sven Hendrik
(86) Internationale Anmeldenummer: PCT/EP2009/008379
(87) Internationale Veröffentlichungsnummer: WO 2010/063396

(56) Entgegenhaltungen:
- EP-A1- 1 288 093
- EP-A2- 1 241 063
- WO-A1-2005/025957
- DE-A1- 4 408 349
- DE-A1- 10 242 735
- DE-B3-102006 054 615

## Beschreibung

Die Erfindung betrifft ein Verfahren zum Betreiben eines hydrodynamischen Retarders mit wenigstens einem Arbeitsraum, nach der im Oberbegriff von Anspruch 1 näher definierten Art. Ein solches Verfahren ist in der WO 2005/025957A1 beschrieben.

Aus dem allgemeinen Stand der Technik ist es bekannt, Retarder als verschleißfreie Dauerbremsen, insbesondere in Nutzfahrzeugen, einzusetzen. Die Retarder sind dabei typischerweise direkt an einem Nebenabtrieb eines Verbrennungsmotors oder eines Getriebes oder an der Gelenkwelle eines solchen Fahrzeugs angebracht. Sie werden für den Betrieb mit einem Arbeitsmedium, typischerweise Öl oder Wasser beziehungsweise ein Wassergemisch, befüllt. Im Bremsbetrieb wird das Arbeitsmedium im Arbeitsraum des hydrodynamischen Retarders durch Antrieb eines beschaufelten Rotors des Retarders in eine Kreislaufströmung versetzt, so dass Drehmoment vom Rotor des Retarders hydrodynamisch auf einen beschaufelten Stator oder einen beschaufelten Gegenlaufrotor übertagen wird, was zum hydrodynamischen Abbremsen des Rotors führt, und somit die gewünschte Bremswirkung des Retarders eintritt. Im Nichtbremsbetrieb ist der Arbeitsraum des Retarders im Wesentlichen oder vollständig entleert, so dass kein Drehmoment vom Rotor auf den Stator beziehungsweise den Gegenlaufrotor übertragen wird und entsprechend keine Bremswirkung erzeugt wird. Dieser allgemein bekannte und übliche Aufbau eines hydrodynamischen Retarders ermöglicht, den Retarder auszuschalten, ohne dass sein Rotor über schaltbare Trennkupplungen vom Antriebsstrang getrennt werden müsste.

Beim Einsatz derartiger Retarder, insbesondere in Nutzfahrzeugen, hat man mitunter festgestellt, dass der Arbeitsraum des Retarders gegenüber der Umgebung oder einem anderen sich anschließenden Bauraum Undichtheiten aufweist. Diese Undichtheiten treten insbesondere im Bereich der Dichtungen auf, welche den Arbeitsraum des Retarders im Bereich der Rotorwelle nach außen abdichten. Vor allem sind derartige Undichtheiten bei Retardern zu beobachten, welche in Fahrzeugen eingesetzt werden, die den Retarder im regelmäßigen Betrieb eher selten einsetzen, insbesondere bei Fahrzeugen, welche vorwiegend im Langstreckenbetrieb eingesetzt werden.

Die Herkunft der auftretenden Undichtheiten ist dabei unklar, ihnen wird jedoch über einen vergleichsweise häufigen Austausch der eingesetzten Dichtungen begegnet, was jedoch wartungsintensiv und dementsprechend kosten- und zeitaufwendig ist.

In der DE 10 2005 009 456 A1 wird dieser Problematik dadurch begegnet, dass im Bereich der Rotorwelle über mehrere hintereinander geschaltete Dichtungen für eine entsprechende Abdichtung des Arbeitsraums gegenüber der Umgebung gesorgt wird. Dieser Aufbau weist jedoch den Nachteil auf, dass er konstruktiv vergleichsweise aufwendig ist und sich nicht ohne weiteres bei bereits existierenden und in Fahrzeugen verbauten Retardern nachrüsten lässt.

Aufgabe der hier vorliegenden Erfindung ist es nun, ein Verfahren zu schaffen, welches die Dichtheit eines beliebigen Retarders beziehungsweise die Lebensdauer seiner Dichtungen entsprechend erhöht, ohne mit konstruktiven Maßnahmen in den Aufbau des Retarders eingreifen zu müssen.

Erfindungsgemäß wird diese Aufgabe durch die im kennzeichnenden Teil von Anspruch 1 genannten Merkmale gelöst.

Den Erfindern hat sich in überraschender Weise gezeigt, dass bei häufig eingesetzten Retardern deutlich längere Lebensdauern der Dichtungen erzielt werden können, als dies bei wenig eingesetzten Retardern der Fall ist. Entsprechende Untersuchungen haben dann gezeigt, dass dies insbesondere mit der Benetzung der Dichtung mit dem Arbeitsmedium zu tun hat. Dementsprechend wurde von den Erfindern erkannt, dass es auch im Nichtbremsbetrieb für die Dichtheit des Retarders von Vorteil ist, wenn in den Arbeitsraum des Retarders pulsierend immer wieder eine vorgegebene Menge an Arbeitsmedium eingebracht wird. Unter "pulsierend" im Sinne der hier vorliegenden Erfindung ist dabei ein impulsartiges in zeitlichen Abständen wiederkehrendes Aktivieren zu verstehen. Dabei können jegliche denkbaren Formen und Größen von Steuerungsimpulsen, beispielsweise Rechteckimpulse, Sägezahnimpulse, sinusförmige Impulse, halbkreisförmige Impulse oder dergleichen zur Erzeugung der pulsierenden Aktivierung in Betracht kommen. Dieses pulsierende Einbringen einer geringen Menge an Arbeitsmedium von Zeit zu Zeit kann dementsprechend auch als eine Art Schmierimpuls verstanden werden. Ein solcher über ein zeitliches Raster eingebrachter Schmierimpuls hält die Dichtungen des Arbeitsraums entsprechend geschmeidig und kühlt diese, sodass diese über eine sehr lange Lebensdauer ihrer Funktion erfüllen können und den Arbeitsraum des Retarders zuverlässig nach außen abdichten.

Die für einen derartigen Schmierimpuls eingesetzte Menge sollte dabei eher klein gewählt werden, um keine oder allenfalls eine minimale Bremswirkung des Retarders auszulösen, sodass für den Fahrer eines mit dem Retarders ausgestatteten Fahrzeugs das erfindungsgemäße Verfahren letztlich nicht nachteilig bemerkbar wird. Die für den Schmierimpuls in den Retarder eingebrachte Menge an Arbeitsmedium wird dann durch den Retarder selbst aus dem Arbeitsraum wieder herausgepumpt, sodass eine eventuell auftretende minimale Bremswirkung lediglich von sehr kurzer Dauer wäre.

Der Retarder kann gemäß einer Ausführungsform des erfindungsgemäßen Verfahrens dabei derart betrieben werden, dass die Dauer der Impulse, die Amplitude und/oder der zeitliche Abstand zwischen den Impulsen vorgegeben wird. Sowohl ein konstanter zeitlicher Abstand, eine konstante Amplitude beziehungsweise eine konstante Dauer der Impulse als auch ein Variieren des zeitlichen Abstandes und/oder der Amplitude beziehungsweise eine variierende Dauer der Impulse sind möglich. Die Dauer der Impulse könnte alternativ auch als Dauer der Aktivierung des Einbringens von Arbeitsmedium in den Arbeitsraum bezeichnet werden.

In einer besonders günstigen Ausgestaltung der Erfindung kann die Dauer der Impulse, die Amplitude und/oder der zeitliche Abstand zwischen den Impulsen in Abhängigkeit der Temperatur des Arbeitsmediums und/oder einer anderen vorgegebenen Größe verändert werden.

Diese besonders vorteilhafte Variante ermöglich es, die Dauer und die Anzahl der benötigten Schmierimpulse über eine sehr einfache und leicht zu realisierende Temperaturmessung bezüglich des Betriebs des Retardes zu optimieren. So kann beispielsweise mit steigender Temperatur des Arbeitsmedium entweder die Dauer der Impulse, die Amplitude und/oder der zeitliche Abstand zwischen den Impulsen so angepasst werden, dass eine häufigere und intensivere Benetzung des Arbeitsraums mit dem Arbeitsmedium erfolgt. Über den gesamten Betrieb gesehen, bedeutet dies, dass die Anzahl der Schmierimpulse in Abhängigkeit des Betriebsparameters "Temperatur" minimiert werden kann. Die auch bei sehr geringen Mengen an Arbeitsmedium möglicherweise auftretenden Leistungsverluste in dem Retarder können so noch weiter minimiert werden, ebenso, wie die Leistung, welche benötigt wird, um die vorgegebene Menge an Arbeitsmedium als Schmierimpuls in den Arbeitsraum einzubringen.

Ferner kann gemäß einer sehr vorteilhaften Weiterbildung der Erfindung alternativ oder ergänzend zur Temperatur die Dauer der Impulse, die Amplitude und/oder der Abstand zwischen den Impulsen in Abhängigkeit der Drehzahl eines Rotors des Retarders verändert werden.

Dies ermöglicht vergleichbare Vorteile, wie beim Einsatz des Betriebsparameters "Temperatur". Bei einer Kombination der beiden Betriebsparameter "Temperatur" und "Rotordrehzahl" kann sogar eine weitere Optimierung erzielt werden. Gemäß einer sehr günstigen Weiterbildung der Erfindung kann es außerdem vorgesehen sein, die Dauer der Impulse, die Amplitude und/oder den Abstand zwischen den Impulsen alternativ oder zusätzlich in Abhängigkeit der Geschwindigkeit eines mit dem Retarders ausgestatteten Fahrzeugs zu verändern.

Dies bietet gegebenenfalls den Vorteil, dass der Wert der Geschwindigkeit des Fahrzeugs über ein entsprechendes Steuergerät leichter verfügbar ist, als die Drehzahl des Rotors des Retarders. Sofern dieser über eine feste Übersetzung in den Triebstrang des Fahrzeugs eingekoppelt ist, wie es typischerweise der Fall sein wird, so besteht zwischen diesen beiden Größen jedoch ein fester Zusammenhang. Es ist daher einfach möglich, alternativ zur Drehzahl des Rotors die Geschwindigkeit des Fahrzeugs einzusetzen, sofern diese über die entsprechende Sensorik des Fahrzeugs leichter zu erhalten ist, als dies bei der Drehzahl des Rotors der Fall ist. Beispielsweise kann ein über den CAN-Bus des Fahrzeugs zur Verfügung gestelltes Geschwindigkeitssignal als Eingangsgröße zur Bestimmung der Notwendigkeit eines Schmierimpulses herangezogen werden.

In einer besonders günstigen Variante der Erfindung ist es dabei vorgesehen, dass das pulsierende Einbringen des Arbeitsmediums in den Arbeitsraum nur erfolgt, wenn eine vorgegebene erste Grenztemperatur des Arbeitsmediums überschritten wird, oder eine vorgegebene Grenzdrehzahl des Rotors beziehungsweise eine Grenzgeschwindigkeit des Fahrzeugs überschritten wird. Gemäß einer alternativen Ausführungsform erfolgt das pulsierende Einbringen des Arbeitsmediums im Nichtbremsbetrieb in den Arbeitsraum nur, wenn eine vorgegebene erste Grenztemperatur des Arbeitsmediums überschritten wird und gleichzeitig eine vorgegebene Grenzdrehzahl des Rotors beziehungsweise eine Grenzgeschwindigkeit des Fahrzeugs überschritten wird.

In dieser Ausgestaltung der Erfindung wird also die erfindungsgemäße Anwendung des Schmierimpulses nur in den Betriebszuständen stattfinden, in denen dieser auch nötig ist, nämlich wenn eine entsprechende Geschwindigkeit des Fahrzeugs beziehungsweise Drehzahl des Rotors einen entsprechend intensiven Betrieb des Retarders beziehungsweise des Fahrzeugs anzeigt, und/oder wenn eine vergleichbare Indikation durch das Überschreiten einer ersten Grenztemperatur des Arbeitsmediums angezeigt wird. Wenn keine der beiden Bedingungen vorliegt, so wird auf den Schmierimpuls verzichtet, sodass der damit verbundene Aufwand an Leistung und die Verluste eingespart werden können. Diese Ausgestaltung des Verfahrens trägt also zu einer Optimierung der Anzahl und/oder der Dauer der Schmierimpulse bei, welche während des Betriebs des Fahrzeugs beziehungsweise des Retarders über einen längeren Zeitraum hinweg auftreten werden.

Eine weitere Größe, in Abhängigkeit von welcher die Dauer der Impulse, die Amplitude und/oder der zeitliche Abstand zwischen den Impulsen verändert werden kann, ist die Viskosität beziehungsweise die stoffabhängige Schmiereigenschaft des Arbeitsmediums, insbesondere Öl. Beispielsweise kann die Dauer und/oder die Amplitude beziehungsweise der zeitliche Abstand in Abhängigkeit der als Arbeitsmedium verwendeten Ölsorte eingestellt werden. Auch ist es möglich, zu berücksichtigen, dass das Arbeitsmedium, insbesondere Öl, im Laufe der Betriebszeit altert und somit den zeitlichen Abstand zwischen den Schmierimpulsen und/oder die Dauer der Schmierimpulse beziehungsweise deren Form (zum Beispiel die Amplitude) mit zunehmenden Alter des Arbeitsmediums beziehungsweise mit zunehmender Anzahl von Aktivierungen des Retarders und/oder zunehmender Kilometerleistung des Fahrzeugs zu verändern, insbesondere den zeitlichen Abstand zu verkürzen und/oder die Dauer beziehungsweise die Amplitude zu erhöhen.

Die Erfindung kann dabei in besonders vorteilhafter Art und Weise bei herkömmlichen Ölretardern eingesetzt werden.

Alternativ hierzu ist die Erfindung auch bei Retardern einsetzbar, die mit einem anderen Arbeitsmedium, beispielsweise Wasser oder ein Wassergemisch betrieben werden. Insbesondere ist die Erfindung auch bei Wasserretardem einsetzbar, welche als Arbeitsmedium das Kühlwasser des Fahrzeugs nutzen, da auch hier über einen entsprechenden Schmierimpuls mit dem Arbeitsmedium und eine dadurch erzielte Benetzung des Arbeitsraums eine höhere Lebensdauer der Dichtungen erreicht wird.

Weitere vorteilhafte Ausgestaltungen der Erfindung ergeben sich dabei aus den restlichen Unteransprüchen und werden anhand des nachfolgend dargestellten Ausführungsbeispiels deutlich, welches unter Bezugnahme auf die Figuren erläutert wird.

Es zeigen:
- Figur 1: ein Diagramm mit einer möglichen Variante zur Durchführung des erfindungsgemäßen Verfahrens; und
- Figur 2: eine Darstellung der Frequenz der Schmierimpulse über der Temperatur des Arbeitsmediums in einer weiteren Variante des erfindungsgemäßen Verfahrens; und
- Figur 3: ein Ablaufdiagramm für eine alternative Variante zur Durchführung des erfindungsgemäßen Verfahrens.

Der Betrieb und der Einbau eines Retarders in den Triebstang eines Fahrzeugs als verschleißfreie Dauerbremse ist für einen Fachmann auf dem Gebiet der Retardertechnik geläufig und üblich, sodass hierauf im Rahmen des hier dargestellten erfindungsgemäßen Betriebsverfahrens nicht weiter eingegangen wird. Für die Nutzung des nachfolgend beschriebenen Verfahrens zum Betreiben eines Retarders sind dabei grundsätzlich alle Bauformen von hydrodynamischen

Retardern möglich, egal ob sie Öl oder Wasser beziehungsweise ein wasserhaltiges Gemisch als Arbeitsmedium verwenden.

Auch die Art und Weise, wie der Retarder für den Bremsbetrieb mit dem Arbeitsmedium befüllt wird, spielt für die hier vorliegende Erfindung keine oder eine untergeordnete Rolle. Grundsätzlich ist es dabei denkbar und üblich, den Arbeitsraum des Retarders über eine geeignete Leitung mit einem Ventil, beispielsweise einem Magnetventil zu befüllen, wobei das Arbeitsmedium sich in einem entsprechenden Reservoir befindet, in dem es unter einem höheren Druck steht, als dem Druck, der im Arbeitsraum herrscht. Solange das Ventil geöffnet ist wird das Arbeitsmedium in den Arbeitsraum des Retarders einströmen. Der Retarder kann sich dann typischerweise durch die Bewegung des Rotors wieder selbst entleeren und das Medium in den Speicherraum zurückfördern.

Alternativ dazu wäre es denkbar, dass Arbeitsmedium über eine entsprechende Fördereinrichtung, beispielsweise ein Pumpe bei Bedarf für den Bremsbetrieb in den Arbeitsraum des Retarders zu fördern.

Die dritte übliche Variante besteht darin, dass Arbeitsmedium in einem entsprechenden Volumen zu bevorraten, welches unter einem vergleichbaren Druck steht, wie der Arbeitsraum des Retarders. Dieses Speichervolumen ist dabei so angeordnet, dass das Arbeitsmedium nicht selbständig in den Arbeitsraum des Retarders strömt. In dem Vorratsvolumen kann dann außerdem eine entsprechend bewegliche Vorrichtung, beispielsweise ein Kolben oder bevorzugt eine Membran angeordnet sein. Durch eine entsprechende Druckbeaufschlagung auf die dem Speichervolumen abgewandten Seite der Membran oder des Kolbens, beispielsweise mit Druckluft wird das Arbeitsmedium dann aus dem Speichervolumen heraus in den Arbeitsraums des Retarders gepresst, so dass eine sehr schnelle Befüllung des Arbeitsraums des Retardes mit dem Arbeitsmedium ermöglich wird.

Andere Befüllvorgänge sind vorstellbar.

Beim hier vorliegenden Verfahren zum Betreiben eines Retarders spielt es nun eine entscheidende Rolle, dass über geeignete Maßnahmen eine vorgegebene Menge an Arbeitsmedium pulsierend in den Arbeitsraum des Retarders eingebracht werden kann. Dies könnte bei der ersten und dritten oben beschriebenen Variante beispielsweise dadurch erfolgen, dass das Magnetventil zwischen Speichervolumen und Arbeitsraum für eine kurze Zeitdauer geöffnet wird beziehungsweise die Druckbeaufschlagung der dem Speichervolumen abgewandten Seite der Membran oder des Kolbens typischerweise ebenfalls über ein entsprechendes Ventil für eine kurze Zeit erfolgt. Bei der zweiten oben beschriebenen Variante könnte dies durch ein entsprechendes kurzzeitiges Anlaufen der Fördereinrichtung im Falle einer elektrisch angetriebenen Fördereinrichtung beispielsweise über einen entsprechenden elektrischen Impuls an den Motor der Fördereinrichtung erfolgen. Natürlich wäre es auch möglich, eine durch eine Kupplung abgetrennte Füllpumpe oder eine aufgrund einer vorgesehenen Schlupfkupplung vergleichsweise langsam umlaufende Füllpumpe über die Kupplung kurzzeitig zuzuschalten. Auch eine entsprechende Umschaltung auf der hydraulischen Seite der Pumpe, zunächst an dem Retarder vorbei und dann kurzzeitig in den Retarder, wäre vorstellbar.

Die verschiedenen Varianten, über einen entsprechenden Impuls ein kurzzeitiges impulsartiges (pulsierendes) Einbringung von Arbeitsmedium in den Arbeitsraum eines Retarders zur realisieren, dürfte dabei für den Fachmann verständlich sein, und lassen sich entsprechend auf andere als die bisher beschriebenen Varianten ausdehnen. Für das erfindungsgemäße Verfahren ist diese konkrete Umsetzung jedoch von untergeordneter Bedeutung, da lediglich die Tatsache, dass ein solcher Schmierimpuls ausgelöst wird, und welche Mengen an Arbeitsmedium er in welchen Betriebszuständen in den Retarder einbringt für die Erfindung von entsprechender Bedeutung sind.

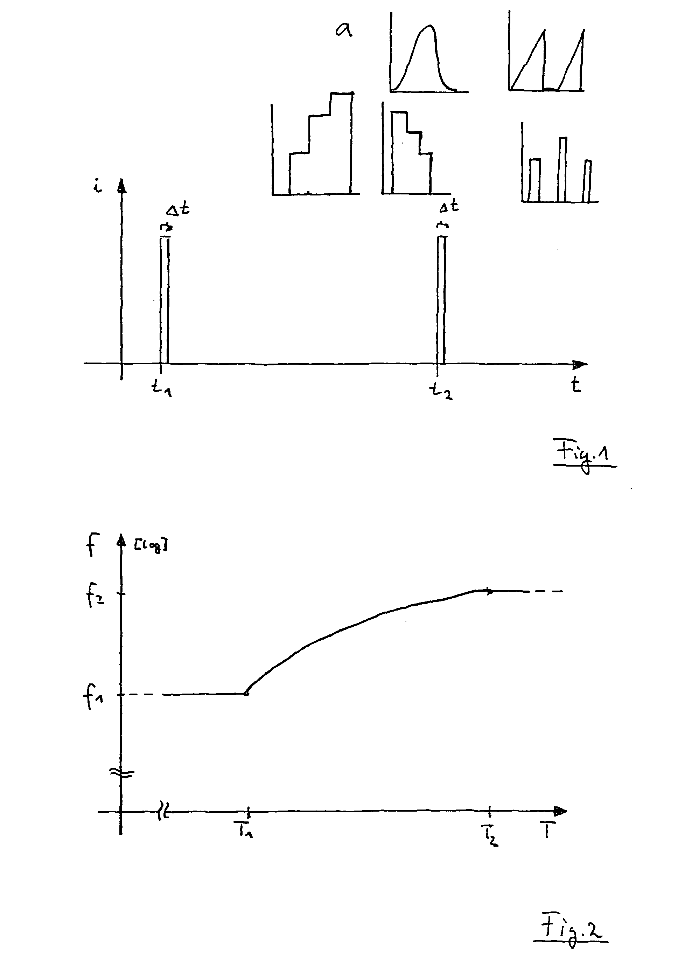

In dem Diagramm der Figur 1 ist eine erste Variante für einen derartigen erfindungsgemäßen Schmierimpuls dargestellt. Sobald sich der Retarder nicht im Bremsbetrieb befindet, werden entsprechende Impulse beispielsweise an ein Ventil oder den elektrischen Motor einer Fördereinrichtung gesendet, um ein entsprechendes pulsierendes Einbringen von Arbeitsmedium in den Arbeitsraum des Retarders zu ermöglichen. In dem Diagramm der Figur 1 ist dabei ein Ausführungsbeispiel dargestellt, bei dem ein entsprechender Impuls von einer jeweils konstanten Impulsdauer Δt von circa 50 bis 250 Millisekunden, besonders bevorzugt in der Größenordnung von circa 100 Millisekunden initiiert wird. Dabei sind die in der Darstellung der Figur 1 beispielhaft rechteckig gewählten Impulse nur eine mögliches Beispiel. Alternativ hierzu wären andere Impulseformen denkbar, beispielsweise sägezahnförmige, sinusförmige, trapezförmige, halbkreisförmige oder andersartig ausgeformte Impulse. Durch diesen Impuls wird also für eine sehr kurze Zeit Arbeitsmedium in den Arbeitsraum des Retarders eingebracht. Das Arbeitsmedium wird in seiner Menge dabei durch die Dauer des Impulses vorgegeben. Bei der typischen Bauform von Retardern mit einem Arbeitsraumvolumen von circa 3 bis 9 Litern sind dabei Mengen von 50 bis 100 Milliliter vollkommend ausreichend. Typischerweise werden als Schmierimpuls also weniger als 5 %, bevorzugt weniger als 2 %, der Füllmenge an Arbeitsmedium im Bremsbetrieb eingebracht. Durch diese vergleichsweise geringe Menge an Arbeitsmedium wird verhindert, dass es zu einer Bremswirkung beziehungsweise einer für den Fahrer eines derartigen Fahrzeugs spürbaren Bremswirkung kommt. Dennoch reicht die Menge aus, um von dem Rotor des Retarders so verwirbelt zu werden, dass eine entsprechende Benetzung des Arbeitsraums des Retarders und hier insbesondere der Bereiche mit den Dichtungen erzielt wird. Durch diese pulsierende Benetzung der Dichtungen, wenn der Retarder sich im Nichtbremsbetrieb befindet, wird eine entsprechend höhere Lebensdauer der Dichtungen und eine bessere Abdichtung des Retarders erreicht.

In der Darstellung der Figur 1 ist beispielhaft und nicht maßstäblich ein Betriebsverfahren dargestellt, bei dem ein bestimmter hier auf der y-Achse aufgetragener Strom I in bestimmten Pulsen zu einem Ventil geleitet wird, um es zu öffnen. Dies sorgt dann wiederum dafür, dass Arbeitsmedium während des gepulsten Öffnens des Ventils in den Arbeitsraum gelangen kann. Es werden dabei in dem in Figur 1 dargestellten Betriebsverfahren konstante Pulsdauern Δt in der oben genannten Größenordnung verwendet, welche in konstanten Zeitabständen (t₂-t₁) ausgelöst werden. Mit diesen sehr einfach und effizienten Verfahren kann also immer wenn der Retarder im Nichtbremsbetrieb läuft, pulsierend ein Schmierimpuls in den Arbeitsraum eingebracht werden. Beispielhaft sind hier Impulsdauern von circa 100 Millisekunden und ein Abstand zwischen den Impulsen in der Größenordnung von 10 bis 250 Sekunden, bevorzugt in den Größenordnung von circa 60 bis 120 Sekunden, gewählt.

In der Darstellung a der Figur 1 sind beispielhaft weitere Impulsformen für das pulsierende Einbringen von Arbeitsmedium in den Arbeitsraum im Nichtbremsbetrieb des Retarders dargestellt. Vorliegend sind eine Art Sinusbogen beziehungsweise ein bogenförmiger Verlauf sowie ein sägezahnförmiger Verlauf und ferner einzelne Rechteckimpulse mit variierender beziehungsweise alternierender Amplitude nur als ausgewählte mögliche Beispiele der Impulsform dargestellt. Anstelle des sägezahnförmigen Verlaufs könnte auch ein zeitlich gestufter zunehmender Verlauf und/oder zeitlich gestufter abnehmender Verlauf der Amplitude möglich. Andere Impulsformen, um zu dem erfindungsgemäßen pulsierenden Einbringen zu gelangen, sind natürlich vorstellbar.

In Figur 2 ist nun ein weiteres Diagramm dargestellt, bei dem auf einer logarithmischen Skala die Frequenz f der Schmierimpulse, als der zeitliche Abstand zwischen den einzelnen Schmierimpulsen dargestellt ist. Auch bei diesem Verfahren soll eine konstante Impulsdauer Δt verwendet werden, da diese besonders einfach und effizient darzustellen ist, und durch diese immer eine gleichbleibende vorgegebene Menge an Arbeitsmedium in den Arbeitsraum gelangt, welche durch die Wahl der Dauer des Schmierimpulsen je nach eingesetztem Retarder, so gewählt werden kann, dass die Menge den oben genannten Mengenvorgaben entspricht, um keine ungewünschte Bremswirkung des Retarders durch den Schmierimpuls zu verursachen.

Auf der x-Achse ist dem in Figur 2 dargestellten Ausführungsbeispiel beispielhaft die Temperatur T des Arbeitsmediums des Retarders dargestellt. Es ist zu erkennen, dass bis zu einer ersten Grenztemperatur T₁ eine konstante Dauer zwischen den einzelnen Schmierimpulsen realisiert ist, beispielsweise in einer Größenordnung von circa 180 Sekunden, was zur entsprechenden Frequenz f₁ führt. Mit zunehmender Temperatur des Arbeitsmediums oberhalb der ersten Grenztemperatur T₁ steigt die Frequenz zwischen den einzelnen Schmierimpulsen dann beispielsweise linear an. Durch die logarithmische Darstellung der Frequenzen auf der y-Achse wird dieser lineare Anstieg hier durch eine entsprechende logarithmisch verlaufende Kurve angedeutet. Dieser lineare Anstieg erfolgt bis zu einer zweiten Grenztemperatur T₂ des Arbeitsmediums. Oberhalb dieser zweiten Grenztemperatur T₂ ist dann wieder eine konstante Dauer zwischen den einzelnen Schmierimpulsen vorgegeben. Da die Grenztemperatur T₂ typischerweise im oberen Bereich der in einem Retarder auftretenden Temperaturen gewählt werden wird, ist die Frequenz der Schmierimpulse hier bereits relativ hoch, es können beispielsweise Dauern in der Größenordnung von 10 Sekunden zwischen den einzelnen Schmierimpulsen liegen. Zwischen diesen beiden um den Faktor 15 bis 25, insbesondere 15 bis 20, voneinander abweichenden Frequenzen wird im typischerweise auftretenden Betriebsfall des Retarders bei Temperaturen zwischen der Grenztemperatur T₁ und der zweiten Grenztemperatur T₂ dann der entsprechende lineare Verlauf für die Schmierimpülse gewählt werden. Anstelle des linearen Verlaufs, sind auch andere Zusammenhänge denkbar, zum Beispiel ein gestufter Verlauf, ein quadratischer Verlauf, ein logarithmischer Verlauf oder dergleichen. Natürlich sind auch andere Faktoren vorstellbar.

Alternativ zu Verwendung der Temperatur des Arbeitsmediums, um die Belastung des Retarders zu erfassen und dementsprechend die Frequenz der

Schmierimpulse zu steuern, wäre es auch denkbar, dass die Frequenz der Schmierimpulse in Abhängigkeit von anderen Größen variiert wird, beispielsweise in Abhängigkeit der Drehzahl des Rotors oder, sofern dies einfacher zu messen ist, in Abhängigkeit der Fahrgeschwindigkeit des mit dem Retarder ausgestatteten Fahrzeuges, da diese bei entsprechender fester Übersetzung bei der Einbindung des Retarders in den Triebstrang proportional zur Drehzahl des Rotors des Retarders ist. Bei einem Primärretarder wäre beispielsweise auch die Motordrehzahl heranziehbar. Generell kann jegliche Größe oder Drehzahl verwendet werden, aus welcher auf die Drehzahl des angetriebenen Rotors des Retarders geschlossen werden kann, und welche insbesondere proportional zu dieser ist.

Selbstverständlich können die Werte dabei auch untereinander entsprechend kombiniert werden. Besonders sinnvoll ist dabei eine Variante, welche über eine entsprechende Drehzahl oder Geschwindigkeit feststellt, ob die Verwendung von Schmierimpulsen überhaupt notwenig ist, bevor diese entsprechend aktiviert werden.

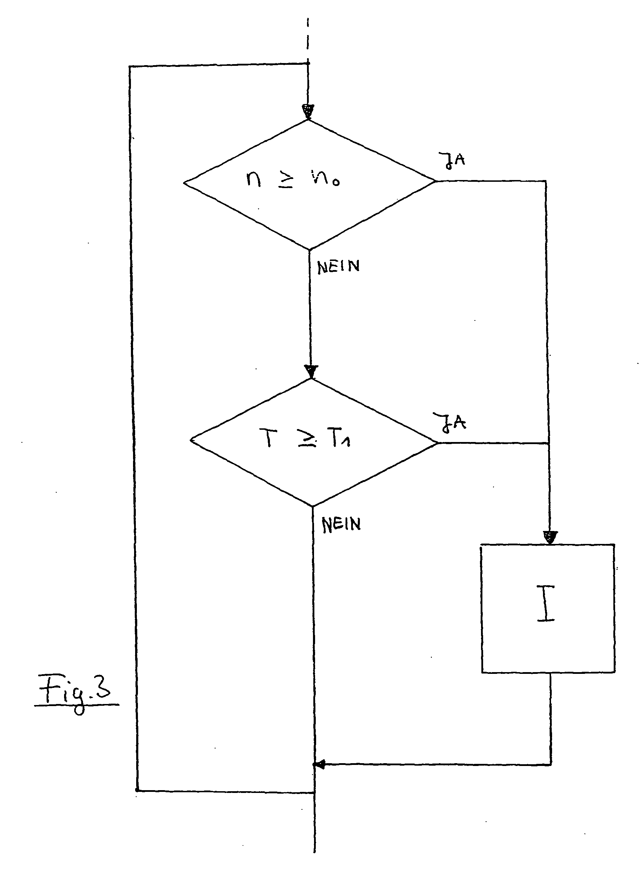

Figur 3 zeigt in einem Ablaufdiagramm eine derartige vergleichsweise komplexe Strategie zur Steuerung von Schmierimpulsen. Zuerst wird bei dieser Strategie geprüft, ob die Drehzahl des Rotors n oberhalb einer vorgegebenen Grenzdrehzahl nₒ liegt. Alternativ dazu wäre auch eine entsprechende Überprüfung der bei einem Sekundärretarder typischerweise proportional zur Drehzahl des Rotors verlaufenden Geschwindigkeit des Fahrzeugs denkbar. Sobald die Drehzahl n des Rotors oberhalb der vorgegebenen Grenzdrehzahlung nₒ liegt, wird von einer entsprechenden Steuerung ein Schmierimpuls angestoßen, was hier durch den quadratischen Kasten mit der Bezeichnung I symbolisiert werden soll. Dieser Schmierimpuls kann beispielsweise der im Rahmen der Figur 2 im Detail erläuterte Schmierpuls sein.

Sollte die entsprechende Drehzahl n des Rotors nicht oberhalb der Grenzdrehzahl nₒ liegen, so wird dennoch eine entsprechende Temperaturmessung der Temperatur des Arbeitsmediums ausgewertet. Liegt diese Temperatur T oberhalb der ersten Grenztemperatur T₁, so wird ebenfalls eine entsprechende Aktivierung des Programms für die Schmierimpulse I gestartet. Auch hier kann wiederum das in Figur 2 im Detail beschriebene Programm verwendet werden, wobei selbstverständlich der Teil mit konstantem Abstand zwischen den Schmierimpulsen unterhalb der Grenztemperatur T₁ hier wegfällt, da das Programm dementsprechend nur gestartet wird, wenn die Grenztemperatur T₁ bereits vorliegt. Liegt die Grenztemperatur T₁ nicht vor, befindet sich also die Temperatur T des Arbeitsmediums unterhalb dieser Grenztemperatur T₁ so wird das Programm an dieser Stelle abgebrochen, ohne dass entsprechende Schmierimpulse aktiviert werden.

Vorteilhaft erfolgen die Messungen der Drehzahl beziehungsweise der Geschwindigkeit und der Temperatur kontinuierlich oder in vorgegebenen Abständen, sodass dementsprechend reagiert werden kann, wenn einer der Werte über seinen vorgegebenen Grenzwert steigt.

Der hier dargelegte Ablauf des Verfahrens ist besonders effizient, da er nur dann Schmierimpulse für den Retarder aktiviert, wenn diese auch unbedingt benötigt werden, nämlich immer dann, wenn die Drehzahl des Rotors oberhalb einer entsprechenden Grenzdrehzahl liegt oder wenn alternativ hierzu eine entsprechend hohe Temperatur in dem Arbeitsmedium des Retarders vorliegt, also immer dann wenn der Retarder entsprechend belastet ist. Die Aktivierung der Schmierimpulse kann dann beispielsweise durch eine entsprechend konstante Vorgabe analog der Darstellung in Figur 1 vorgegeben werden, oder es kann eine entsprechend "intelligente" Steuerung eingesetzt werden, welche wiederum beispielsweise in Abhängigkeit der Temperatur, oder auch hier wiederum in Abhängigkeit anderer Messwerte, beispielsweise der Drehzahl des Rotors oder der Fahrzeuggeschwindigkeit eine entsprechende Variation der Frequenz f der Schmierimpulse vorsieht und damit eine an den Betriebszustand des Retarders optimal angepasste Schmierung desselben ermöglicht.

Alternativ dazu wäre es auch denkbar, nicht die Frequenz f der Schmierimpulse sondern die Länge beziehungsweise Impulsdauer Δt entsprechend dem Belastungszustand des Retarders beispielsweise in Abhängigkeit der Temperatur und/oder der Rotordrehzahl beziehungsweise der Fahrzeuggeschwindigkeit anzupassen. Da die Menge des für den Schmierimpuls genutzten Arbeitsmedium jedoch immer auch mit der Problematik des Auftretens einer eventuellen Bremswirkung verbunden ist, ist der Steuerungsaufwand für diese Variante entsprechend höher.

Es ist auch vorstellbar, eine lernende Steuervorrichtung, insbesondere elektronische Steuervorrichtung (ECU) vorzusehen, die ein Einsatzprofil beziehungsweise ein Fahrerverhalten erkennt und den Schmierimpuls, insbesondere die Dauer und/oder den Abstand zwischen den einzelnen Impulsen, in Abhängigkeit des erfassten Einsatzprofils beziehungsweise des erfassten Fahrerverhaltens vorgibt. Grundsätzlich gilt natürlich, dass auch die Amplitude angepasst werden kann, um zusammen mit der Impulsdauer die Einspritzmenge je Impuls festzulegen.

Abschließend sollen noch einige beispielhafte Werte genannt werden, damit nachvollziehbar wird, in welchen Bereichen sich das Verfahren zum Betreiben des Retarders bewegt. So könnten beispielsweise als erste Grenztemperatur für einen ölbetriebenen Retarder bei Temperaturen zwischen 100 °C und 140 °C, bevorzugt bei circa 120 °C, angesetzt werden, und es könnten für die zweite Grenztemperatur Temperaturen zwischen 150 °C und 200 °C, bevorzugt bei circa 180 °C, angesetzt werden. Für einen Wasserretarder verringerten sich die Temperaturen dementsprechend, sodass typischerweise eine erste Grenztemperatur in der Größenordnung von 100 °C bis 110 °C, bevorzugt bei circa 105 °C liegen wird, während die zweite Grenztemperatur in der Größenordnung von 110 °C bis 120 °C, insbesondere bei circa 112 °C bis 115 °C liegen wird.

Typische Impulsdauern liegen, wie oben bereits beschrieben, weitgehend unabhängig vom Arbeitsmedium in einer Größenordnung von 50 bis 250 Millisekunden, sodass typischerweise weniger als 5 %, bevorzugt weniger als 2 % der Füllmenge des Arbeitsraumes im Betrembetrieb als Schmierimpuls in den Arbeitsraum des Retarders gelangen.

Der Aufbau erlaubt es, mit einer einfachen Anpassung der Steuerung auch bei bereits bestehenden Systemen das entsprechende Betriebsverfahren nachzurüsten. Für den Betreiber eines mit dem Retarder ausgerüsteten Fahrzeugs wird dieses Betriebsverfahren nicht auffallen, er wird jedoch mit einer längeren Lebensdauer der Dichtungen des Retarders beziehungsweise einer besseren Abdichtung des Retarders belohnt.

## Patentansprüche

1. Verfahren zum Betreiben eines hydrodynamischen Retarders mit wenigstens einem Arbeitsraum, welcher
1.1 im Bremsbetrieb mit einem Arbeitsmedium befüllt wird, und
1.2 im Nichtbremsbetrieb im Wesentlichen entleert wird, **dadurch gekennzeichnet, dass**
1.3 im Nichtbremsbetrieb in den Arbeitsraum des Retarders pulsierend eine vorgegebene Menge an Arbeitsmedium eingebracht wird.

2. Verfahren nach Anspruch 1, **dadurch gekennzeichnet, dass** die Dauer (Δt) der Impulse, die Amplitude und/oder der zeitliche Abstand (t₂-t₁) zwischen den Impulsen in Abhängigkeit der Temperatur (T) des Arbeitsmediums verändert wird.

3. Verfahren nach Anspruch 1 oder 2, **dadurch gekennzeichnet, dass** die Dauer (Δt) der Impulse, die Amplitude und/oder der zeitliche Abstand (t₂-t₁) zwischen den Impulsen in Abhängigkeit der Drehzahl (n) eines Rotors des Retarders verändert wird.

4. Verfahren nach Anspruch 1, 2 oder 3, **dadurch gekennzeichnet, dass** die Dauer (Δt) der Impulse, die Amplitude und/oder der zeitliche Abstand (t₂-t₁) zwischen den Impulsen in Abhängigkeit der Geschwindigkeit eines mit dem Retarder ausgestatteten Fahrzeuges verändert wird.

5. Verfahren nach Anspruch 1, **dadurch gekennzeichnet, dass** die Dauer (Δt) der Impulse, die Amplitude und/oder der zeitliche Abstand (t₂-t₁) zwischen den Impulsen in Abhängigkeit der Temperatur (T) des Arbeitsmediums und entweder der Geschwindigkeit eines mit dem Retarder ausgestatteten Fahrzeuges oder der Drehzahl (n) eines Rotors des Retarders verändert wird.

6. Verfahren nach einem der Ansprüche 1 bis 5, **dadurch gekennzeichnet, dass** die Dauer (Δt) der einzelnen Impulse und insbesondere die Amplitude konstant gehalten wird, und der zeitliche Abstand (t₂-t₁) zwischen den einzelnen Impulsen verändert wird.

7. Verfahren nach einem der Ansprüche 1 bis 6, **dadurch gekennzeichnet, dass** das pulsierende Einbringen des Arbeitsmediums in den Arbeitsraum nur dann erfolgt,
7.1 wenn eine vorgegebene erste Grenztemperatur (T₁) des Arbeitsmediums überschritten wird; und/oder
7.2 wenn eine vorgegebene Grenzdrehzahl (nₒ) des Rotors des Retarders beziehungsweise eine vorgegebene Grenzgeschwindigkeit des Fahrzeugs überschritten wird.

8. Verfahren nach einem der Ansprüche 1, 2, 6 oder 7, **dadurch gekennzeichnet, dass** der zeitliche Abstand (t₂-t₁) zwischen den Impulsen unterhalb einer ersten Grenztemperatur (T₁) mit einem ersten Wert konstant gewählt wird, ferner der zeitliche Abstand (t₂-t₁) zwischen den Impulsen zwischen der ersten Grenztemperatur (T₁) und einer zweiten Grenztemperatur (T₂), die größer als die erste Grenztemperatur (T₁) ist, mit zunehmender Temperatur größer gewählt wird, insbesondere stetig aufsteigt, und oberhalb der zweiten Grenztemperatur (T₂) die Dauer (t₂-t₁) zwischen den Impulsen mit einem zweiten Wert konstant gewählt wird.

9. Verfahren nach Anspruch 8, **dadurch gekennzeichnet, dass** der erste Wert das 15 bis 20 Fache des zweiten Werts beträgt.

10. Verfahren nach einem der Ansprüche 1 bis 9, **dadurch gekennzeichnet, dass** als vorgegebene Menge weniger als 10 %, bevorzugt weniger als 5 % oder 2 %, der Füllmenge des Arbeitsmediums im Arbeitsraum im Bremsbetrieb gewählt wird.

11. Verfahren nach einem der Ansprüche 1 bis 10, **dadurch gekennzeichnet, dass** die Impulsdauer (Δt) mit einer Länge von 50-250 ms, bevorzugt 60-120 ms, gewählt wird.

12. Verfahren nach einem der Ansprüche 1 bis 11, **dadurch gekennzeichnet, dass** als Arbeitsmedium Öl genutzt wird.

13. Verfahren nach einem der Ansprüche 1 bis 11, **dadurch gekennzeichnet, dass** als Arbeitsmedium Wasser oder ein im Wesentlichen wasserhaltiges Gemisch, insbesondere das Kühlwassers eines mit dem Retarder ausgestattenden Fahrzeugs, genutzt wird.

## Claims

1. A method for operating a hydrodynamic retarder with at least one work space, which
1.1 is filled with a working medium in braking mode, and
1.2 is more or less emptied in non-braking mode, **characterised in that**
1.3 a preset amount of working medium is introduced pulsingly into the work space of the retarder in the non-braking mode.

2. The method of claim 1, **characterised in that** the duration (delta t) of the pulses, the amplitude and/or the time interval (t2-t1) between the pulses are modified according to the temperature (T) of the working medium.

3. A method according to claim 1 or 2, **characterised in that** the duration (delta t) of the pulses, the amplitude and/or the time interval (t2-t1) between the pulses are modified according to the rotation speed (n) of a rotor of the retarder.

4. The method of claim 1, 2 or 3, **characterised in that** the duration (delta t) of the pulses, the amplitude and/or the time interval (t2-t1) between the pulses are modified according to the speed of a vehicle fitted with the retarder.

5. The method of claim 1, **characterised in that** the duration (delta t) of the pulses, the amplitude and/or the time interval (t2-t1) between the pulses are modified according to the temperature (T) of the working medium and either the speed of a vehicle fitted with the retarder or the rotation speed (n) of a rotor of the retarder.

6. A method according to one of the claims 1 to 5, **characterised in that** the duration (delta t) of the individual pulses and in particular the amplitude are held constant, and the time interval (t2-t1) between the individual pulses is modified.

7. A method according to one of the claims 1 to 6, **characterised in that** the pulsing introduction of the working medium into the work space only takes place
7.1 if a preset first limit temperature (T1) of the working medium is exceeded; and/or
7.2 if a preset limit rotation speed (n0) of the rotor of the retarder or a preset limit speed of the vehicle is exceeded.

8. A method according to one of the claims 1, 2, 6 or 7, **characterised in that** the time interval (t2-t1) between the pulses is selected constant below a first limit temperature (T1) with a first value, moreover the time interval (t2-t1) between the pulses between the first limit temperature (T1) and a second limit temperature (T2), which is greater than the first limit temperature (T1), is selected to increase with temperature, in particular rises steadily, and above the second limit temperature (T₂) the duration (t2-t1) between the pulses is selected constant with a second value.

9. The method of claim 8, **characterised in that** the first value is equal to 15 - 20 times the second value.

10. A method according to one of the claims 1 to 9, **characterised in that** the preset amount is selected as less than 10 %, preferably less than 5 % or 2 % of the filling quantity of the working medium in the work space in braking mode.

11. A method according to one of the claims 1 to 10, **characterised in that** the pulse duration (delta t) is selected with a length of 50-250 ms, preferably 60-120 ms.

12. A method according to one of the claims 1 to 11, **characterised in that** oil is used as the working medium.

13. A method according to one of the claims 1 to 11, **characterised in that** the working medium used is water or a substantially aqueous mixture, in particular the cooling water of a vehicle fitted with the retarder.

## Revendications

1. Procédé d'utilisation d'un retardateur comportant au moins un espace de travail, qui
1.1 se remplit d'un fluide de travail en mode freinage, et
1.2 se vide pratiquement en mode non-freinage, **caractérisé en ce que**,
1.3 en mode non-freinage, l'on introduit dans l'espace de travail du retardateur une quantité prédéterminée de fluide de travail de manière pulsée.

2. Procédé selon la revendication 1, **caractérisé en ce que** Ion modifie la durée (delta t) des impulsions, l'amplitude et/ou l'intervalle de temps (t2-t1) entre les impulsions en fonction de la température (T) du fluide de travail.

3. Procédé selon la revendication 1 ou 2, **caractérisé en ce que** l'on modifie la durée (delta t) der impulsions, l'amplitude et/ou l'intervalle de temps (t2-t1) entre les impulsions en fonction de la vitesse de rotation (n) d'un rotor du retardateur.

4. Procédé selon la revendication 1, 2 ou 3, **caractérisé en ce que** l'on modifie la durée (delta t) der impulsions, l'amplitude et/ou l'intervalle de temps (t2-t1) entre les impulsions en fonction de la vitesse d'un véhicule équipé du retardateur.

5. Procédé selon la revendication 1, **caractérisé en ce que** l'on modifie la durée (delta t) der impulsions, l'amplitude et/ou l'intervalle de temps (t2-t1) entre les impulsions en fonction de la température (T) du fluide de travail et soit de la vitesse d'un véhicule équipé du retardateur soit de la vitesse de rotation (n) d'un rotor du retardateur.

6. Procédé selon l'une quelconque des revendications 1 à 5, **caractérisé en ce que** la durée (delta t) des diverses impulsions et en particulier l'amplitude sont maintenues constantes, et que l'on modifie l'intervalle de temps (t2-t1) entre les diverses impulsions.

7. Procédé selon l'une quelconque des revendications 1 à 6, **caractérisé en ce que** l'adjonction du fluide de travail de manière pulsée dans l'espace de travail ne se produit
7.1 qu'en cas de dépassement d'une première température limite prédéterminée (T1) du fluide de travail; et/ou
7.2 qu'en cas de dépassement d'une vitesse de rotation limite prédéterminé (no) du rotor du retardateur ou d'une vitesse limite prédéterminé du véhicule.

8. Procédé selon l'une quelconque des revendications 1, 2, 6 ou 7, **caractérisé en ce que** l'on sélectionne l'intervalle de temps (t2-t1) pour rester constant entre les impulsions en-dessous d'une première température limite (T1) avec une première valeur, de plus l'intervalle de temps (t2-t1) entre les impulsions entre la première température limite (T1) et une seconde température limite (T2), supérieure à la première température limite (T1), grandit avec la température, en particulier progresse de manière continue et au-dessus de la seconde température limite (T₂) la durée (t2-t1) est sélectionnée constante entre les impulsions avec une seconde valeur.

9. Procédé selon la revendication 8, **caractérisé en ce que** la première valeur correspond à 15 - 20 fois la seconde valeur.

10. Procédé selon l'une quelconque des revendications 1 à 9, **caractérisé en ce que** l'on choisit comme quantité prédéterminée moins de 10 %, de préférence moins de 5 % ou 2 % de la quantité de remplissage du fluide de travail en mode freinage.

11. Procédé selon l'une quelconque des revendications 1 à 10, **caractérisé en ce que** l'on choisit la durée d'impulsion (delta t) d'une longueur de 50-250 ms, de préférence 60-120 ms.

12. Procédé selon l'une quelconque des revendications 1 à 11, **caractérisé en ce que** l'on utilise de l'huile comme fluide de travail.

13. Procédé selon l'une quelconque des revendications 1 à 11, **caractérisé en ce que** l'on utilise comme fluide de travail de l'eau ou un mélange essentiellement aqueux, en particulier l'eau de refroidissement d'un véhicule équipé du retardateur.
